# EUROPÄISCHE PATENTSCHRIFT

(11) **EP 2 848 347 B1**
(45) Veröffentlichungstag und Bekanntmachung des Hinweises auf die Patenterteilung: **29.11.2017**
(21) Anmeldenummer: 14180920.2
(22) Anmeldetag: 14.08.2014
(51) Int. Cl.: B23D 63/00

(54) **Vorrichtung mit variabler Konfiguration zum Schärfbearbeiten von Sägeblättern**
Device with variable configuration for sharpening saw blades
Dispositif présentant une configuration variable destiné à l'aiguisement de lames de scie

(30) Priorität: 11.09.2013 DE 102013015177
(43) Veröffentlichungstag der Anmeldung: 18.03.2015
(73) Patentinhaber: VOLLMER WERKE Maschinenfabrik GmbH, 88400 Biberach/Riss (DE)
(72) Erfinder: Gerst, Manuel, 88400 Biberach (DE); Lenard, Peter, 88400 Biberach (DE); Wagner, Roland, 72393 Burladingen (DE); Wenger, Thomas, 88437 Maselheim (DE)
(74) Vertreter: Thum, Bernhard

(56) Entgegenhaltungen:
- DE-C1- 19 743 528
- US-A- 2 052 600

## Beschreibung

Die vorliegende Erfindung betrifft eine Vorrichtung zum Schärfbearbeiten von Sägeblättern gemäß dem Oberbegriff des Anspruchs 1. Derartige Vorrichtungen sind aus dem Stand der Technik bekannt. Üblicherweise werden derartige Vorrichtungen speziell für bestimmte Einsatzzwecke ausgebildet.
Daher gibt es beispielsweise im Maschinensortiment der Anmelderin Vorrichtungen zum Schärfbearbeiten von Werkstücken, insbesondere von Kreissägeblättern, mit einer Mehrzahl von entlang der Umfangsfläche eines kreisförmigen Sägeblatts angebrachten Schneidzähnen, die je nach Einsatzfall und Geometrie des zu bearbeitenden Werkstücks eine spezielle Maschinenstruktur aufweisen. So werden beispielsweise zum Schärfbearbeiten von Kreissägeblättern mit verhältnismäßig kleinen Durchmessern von bis zu 600 mm Vorrichtungen mit einer anderen Achsanordnung und daraus resultierenden Maschinenkinematik bereitgestellt als zum Schärfbearbeiten von Kreissägeblättern mit verhältnismäßig großen Durchmessern von bis zu 1500 mm. Dementsprechend müssen unterschiedliche Maschinenkonzepte mit einer entsprechenden Teilevielfalt vorgesehen werden, was die Fertigung aufwändig und teuer macht.
Ein Beispiel für eine derartige Vorrichtung findet sich in dem Dokument DE 197 43 528 C1, das eine zum Oberbegriff von Anspruch 1 vergleichbare Vorrichtung zeigt. Ferner wird auf das Dokument US 2 052 600 A verwiesen, das eine Lösung zum Aufbauen kleinere Maschinen zeigt, um verschiedenste Maschinentypen aus einem Satz von Standardteilen herzustellen.
Es ist eine Aufgabe der vorliegenden Erfindung, diesem Problem zu begegnen und eine Vorrichtung der eingangs bezeichneten Art bereitzustellen, die aufgrund ihres modulartigen Aufbaus eine hohe Variabilität und verschiedene Konfigurationsmöglichkeiten bietet.
Diese Aufgabe wird durch eine Vorrichtung mit variabler Konfiguration zum Schärfbearbeiten von Sägeblättern gelöst, umfassend:
- eine Maschinenbasis zum Anbringen der Vorrichtung an einem Untergrund,
- ein Lagermodul mit einer Lagerstelle, das an der Maschinenbasis anbringbar ist,
- eine Bearbeitungseinheit, die unter Vermittlung des Lagermoduls an der Maschinenbasis anbringbar ist, und
- eine Werkstückaufnahmeeinrichtung zur Aufnahme von zu bearbeitenden Werkstücken,
wobei die Lagerstelle des Lagermoduls dazu ausgebildet ist, um wahlweise
- in einer ersten Konfiguration der Vorrichtung das Lagermodul relativ zur Maschinenbasis um die Lagerstelle verschwenkbar an der Maschinenbasis anzubringen, und
- in einer zweiten Konfiguration der Vorrichtung, in der das Lagermodul fest an der Maschinenbasis angebracht ist, die Werkstückaufnahmeeinrichtung verschwenkbar relativ zum Lagermodul aufzunehmen.

Die Erfindung sieht vor, eine Vorrichtung mit einem variabel einsetzbaren Lagermodul bereitzustellen, wobei dieses Lagermodul wenigstens eine Lagerstelle aufweist, wobei diese Lagerstelle wahlweise je nach angestrebter Maschinenkonfiguration dazu dient, das Lagermodul relativ zur Maschinenbasis zu verschwenken, oder seinerseits Komponenten, insbesondere die Werkstückaufnahmeeinrichtung, aufzunehmen, die relativ zum Lagermodul verschwenkt werden können. Diese variablen Einsatzmöglichkeiten ein- und desselben Lagermoduls je nach angestrebter Maschinenkonfiguration ermöglichen es, die Anzahl der Komponenten zum Erhalten der gewünschten Maschinenkonfiguration gering zu halten und dennoch eine verhältnismäßig hohe Variabilität hinsichtlich unterschiedlicher Maschinenstrukturen zu bekommen.

Unter dem Begriff "Werstückaufnahmeeinrichtung" ist eine Anordnung zu verstehen, mit der ein zu bearbeitendes Werkstück aufgenommen, zur Bearbeitung positioniert und fixiert werden kann.

In diesem Zusammenhang sieht eine Weiterbildung der Erfindung vor, dass die Lagerstelle ein Lagerauge mit einer Lagerachse aufweist, die als Schwenkachse für das Lagermodul in der ersten Konfiguration der Vorrichtung und als Schwenkachse für die Werkstückaufnahmeeinrichtung in der zweiten Konfiguration der Vorrichtung vorgesehen ist. Das Lagerauge definiert also die Lagerachse der Lagerstelle und somit die Schwenkachse, um die wahlweise das Lagermodul relativ zur Maschinenbasis oder die zusätzlichen Komponenten relativ zum Lagermodul verschwenkt werden.

Eine Weiterbildung der Erfindung sieht vor, dass das Lagermodul ein Gehäuse mit einem Gehäuseflansch aufweist, der zum Anbringen an der Maschinenbasis in der zweiten Konfiguration der erfindungsgemäßen Vorrichtung vorgesehen ist. Dadurch lässt sich das Lagermodul sicher und unter Erreichen eines vorteilhaften Kraftflusses an der Maschinenbasis anbringen.

Dies ist insbesondere im Hinblick darauf vorteilhaft, dass bei einer Weiterbildung der Erfindung vorgesehen ist, dass an dem Lagermodul die Bearbeitungseinheit, vorzugsweise über eine Ein- oder Mehrachs-Schlittenanordnung, beweglich angebracht ist. Die Schlittenanordnung kann manuell betätigt werden oder automatisch gesteuert sein. Bei dieser Weiterbildung der Erfindung lässt sich beispielsweise über eine Zwei-Achs-Kreuzschlitten-Anordnung eine Verlagerung der Bearbeitungseinheit relativ zum Lagermodul vornehmen. Es versteht sich, dass weitere Verlagerungsachsen, beispielsweise eine dritte lineare Achse oder wenigstens eine zusätzliche rotatorische Achse, an der Bearbeitungseinheit vorgesehen sein können. Zusätzlich kann vorgesehen sein, dass die Bearbeitungseinheit wenigstens eine drehangetriebene Bearbeitungsspindel umfasst. Diese kann mit einem oder mehreren Bearbeitungswerkzeugen gekoppelt sein, beispielsweise einer oder mehreren Schleifscheiben oder Erodierscheiben. Alternativ kann die Bearbeitungseinheit aber auch einen Erodierdraht, eine Lasereinheit oder weitere Bearbeitungswerkzeuge aufweisen.
Eine Weiterbildung der Erfindung sieht vor, dass der Werkstückaufnahmeeinrichtung wenigstens eine Spannvorrichtung zuordenbar ist, mit der das zu bearbeitende Werkzeug aufnehmbar und zur Bearbeitung festlegbar ist. Die Werkstückaufnahmeeinrichtung kann beispielsweise zwei automatisch ansteuerbare oder manuell bedienbare Klemmbacken aufweisen, mit denen das Sägeblatt nach einer Positionierung in einer Solllage temporär zur Bearbeitung fixiert werden kann. Damit ist es auch möglich, die erfindungsgemäße Vorrichtung auf unterschiedlich dicke Sägeblätter einzustellen.
Ferner kann in diesem Zusammenhang vorgesehen sein, dass der Werkstückaufnahmeeinrichtung wenigstens eine Vorschubvorrichtung zuordenbar ist, mit der das zu bearbeitende Werkstück, vorzugsweise im Falle eines kreisrunden Sägeblattes mit einer Mehrzahl von Schneidzähnen, schrittweise zur Bearbeitung einzelner Zähne verlagerbar ist. Eine derartige Vorschubeinrichtung kann beispielsweise einen Vorschubfinger umfassen, der an einem bestimmten Sägezahn angreift und es so ermöglicht, dass das Sägeblatt schrittweise, beispielsweise entsprechend der Zahnteilung, um eine Rotationsachse verdreht wird, so dass jeweils ein Zahn nach dem anderen mit der Bearbeitungseinheit bearbeitbar ist.
Um eine hinreichende Flexibilität für die Bearbeitung unterschiedlicher Werkzeuge bereitzustellen, kann bei der Erfindung in vorteilhafter Weise vorgesehen sein, dass die Werkstückaufnahmeeinrichtung eine Schlittenvorrichtung zum Anpassen an verschiedene Werkstückgrößen aufweist. Somit können beispielsweise kleinere aber auch größere Sägeblätter je nach Bedarf bearbeitet werden.

Eine Weiterbildung der Erfindung sieht vor, dass in der ersten Konfiguration der erfindungsgemäßen Vorrichtung die Werkstückaufnahmeeinrichtung fest mit der Maschinenbasis gekoppelt ist. Dies bedeutet, dass bei dieser Konfiguration dieses Ausführungsbeispiels lediglich das Lagermodul mit der Bearbeitungseinheit um die Lagerachse verschwenkt wird. Ferner kann vorgesehen sein, dass wenigstens eine Schwenkeinheit an der Maschinenbasis vorgesehen ist, um in der ersten Konfiguration der erfindungsgemäßen Vorrichtung das Lagermodul um die Lagerachse zu verschwenken, und um in der zweiten Konfiguration der erfindungsgemäßen Vorrichtung die Bearbeitungseinheit oder die Aufnahmeeinrichtung um die Lagerachse zu verschwenken. Auch diese Maßnahme ermöglicht eine Vereinheitlichung der Komponenten, weil je nach Bedarf und gewählter Maschinenkonfiguration die Schwenkeinheit zum Verschwenken des Lagermoduls um die Lagerachse einerseits oder zum Verschwenken der Werkstückaufnahmeeinrichtung um die Lagerachse andererseits einsetzbar ist.
Die Erfindung wird im Folgenden beispielhaft anhand der beiliegenden Figuren erläutert. Es stellen dar:
- Fig.1: eine räumliche Explosionsansicht zur Erläuterung verschiedener Maschinenkonfigurationen der Vorrichtung gemäß der vorliegenden Erfindung;
- Fig. 2: eine Darstellung einer ersten Maschinenkonfiguration mit relativ zur Maschinenbasis verschwenkbarem Lagermodul;
- Fig. 3: eine Darstellung einer zweiten Maschinenkonfiguration mit relativ zur Maschinenbasis fixiertem Lagermodul;
- Fig. 4: eine Vorderansicht des Lagermoduls bei der Konfiguration entsprechend Figur 3;
- Fig. 5: eine Schnittansicht durch das Lagermodul entlang der Schnittlinie V-V aus Fig. 4;
- Fig. 6: eine räumliche Darstellung des Lagermoduls als Einzelkomponente;
- Fig. 7: eine Vorderansicht des Lagermoduls aus Fig. 6;
- Fig. 8: eine Seitenansicht des Lagermoduls aus Fig. 6; und
- Fig. 9: eine Rückansicht des Lagermoduls aus Fig. 6.

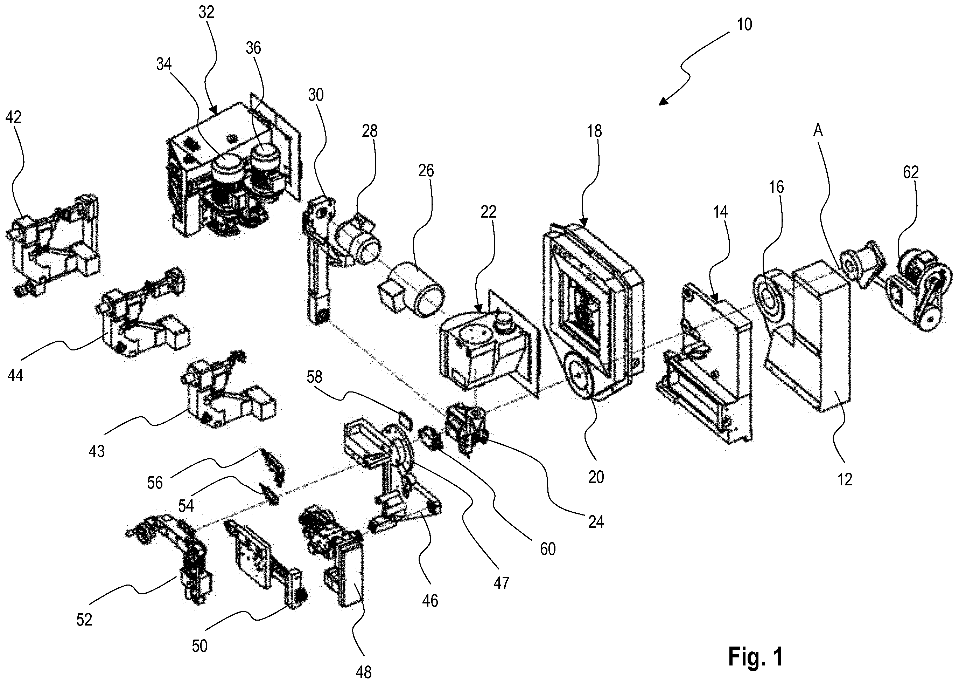

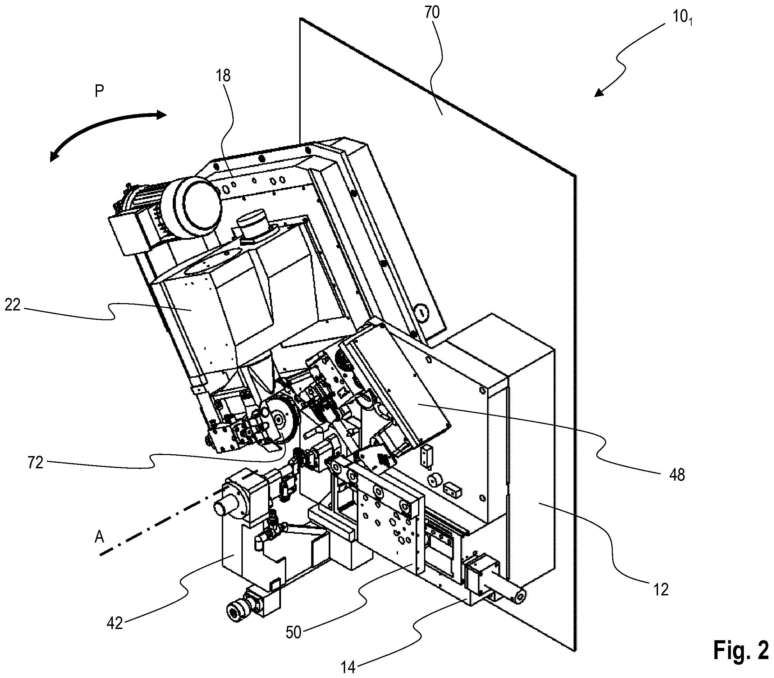

In Figur 1 ist eine Explosionsdarstellung gezeigt, die zur Erläuterung der verschiedenen Konfigurationsmöglichkeiten eines Ausführungsbeispiels der Vorrichtung 10 gemäß der vorliegenden Erfindung dient. Darin erkennt man eine massive Basis 12, mit der sich die Vorrichtung in der später nach erläuterten ersten Konfiguration gemäß Figur 2 auf einem nicht gezeigten Untergrund abstützt. Die Basis 12 kann Teil einer Maschinenbasis bilden, die alternativ auch von einer Halteplatte 70 (siehe Figur 2) allein oder ergänzend zur Basis 12 gebildet sein kann. An der Basis 12 lässt sich ein mehrteiliger Abstandhalter 14 anbringen. Die Basis 12 weist ein Basislagerauge 16 auf, durch dessen Zentrum sich eine Lagerachse A erstreckt.

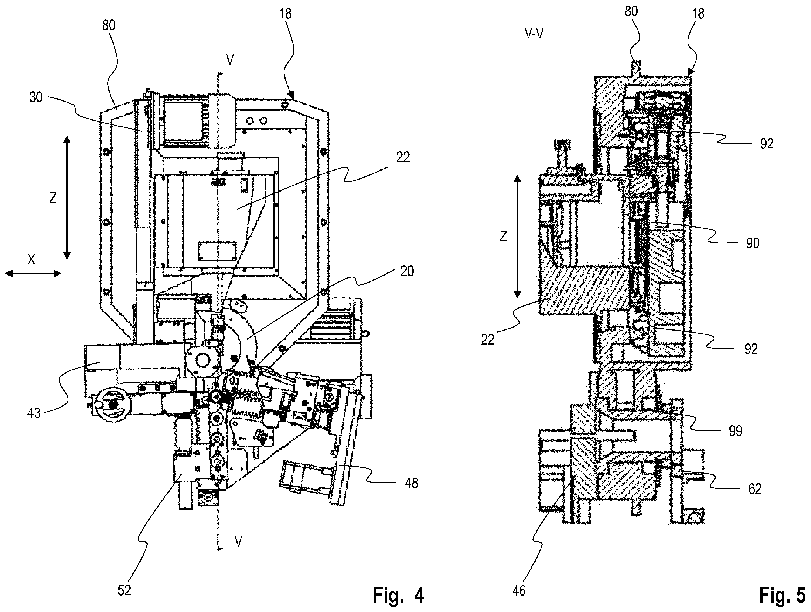

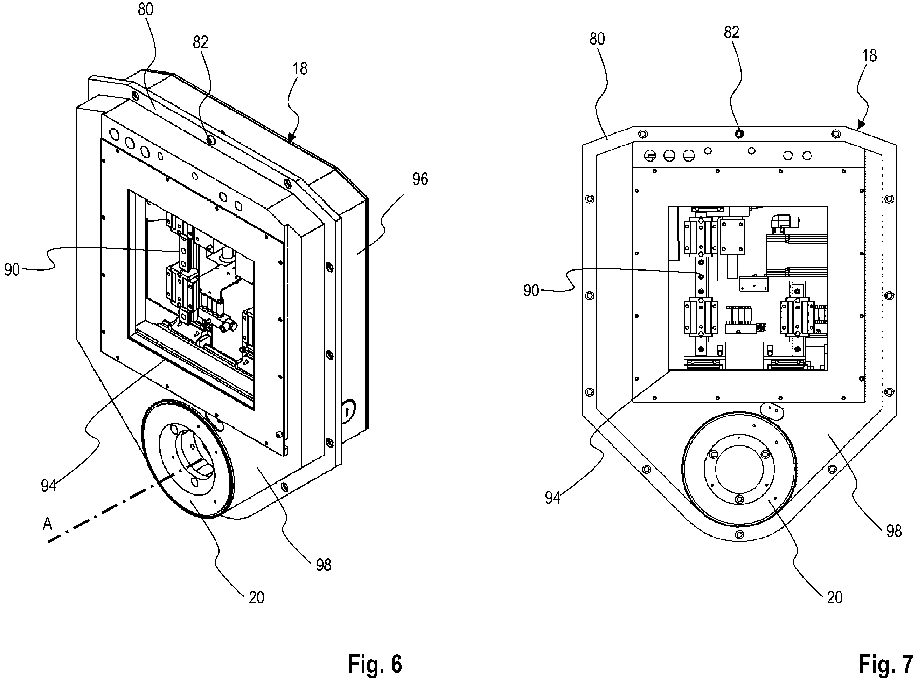

An dem Basislagerauge 16 ist fluchtend mit der Lagerachse A ein Lagermodul 18 in verschiedener Konfiguration anbringbar, worauf im Folgenden noch im Detail eingegangen werden soll. Dies ist der zentrale Aspekt der vorliegenden Erfindung. Das Lagermodul 18 weist ein Lagerauge 20 auf, das gleichsam mit der Lagerachse A fluchtet, wobei die Lagerachse A durch das Zentrum des Lagerauges 20 verläuft. Das Lagermodul 18 wird nachfolgend im Detail noch mit Bezug auf die Figuren 4 bis 9 beschrieben.

An dem Lagermodul 18 ist eine Bearbeitungseinheit 22 angebracht, die variabel bestückt werden kann. So ist bei der Darstellung gemäß Figur 1 an der Bearbeitungseinheit 22 ein Schleifkopf 24 anbringbar, der wahlweise über einen Antriebsmotor 26 oder einen Antriebsmotor 28 und einen Antriebsstrang 30 antreibbar ist. Die Bearbeitungseinheit 22 wird in an sich bekannter Weise zur Bearbeitung von Zahnbrust- oder Zahnrücken eingesetzt.

Alternativ zu der Bearbeitungseinheit 22 ist in Figur 1 eine weitere Bearbeitungseinheit 32 gezeigt, die zwei parallele Antriebsspindeln 34, 36 aufweist, an denen zwei gegenüberliegende Schleifscheiben oder Erodierscheiben angebracht sein können. Diese Bearbeitungseinheit 32 kann alternativ zu der Bearbeitungseinheit 22 an dem Lagermodul 18 angebracht werden. Die Bearbeitungseinheit 32 dient der an sich bekannten Flankenbearbeitung einzelner Zähne.

Ferner erkennt man in Figur 1 einzelne Komponenten einer Werkstückaufnahmeeinrichtung, die mit alternativ einsetzbaren Klemmvorrichtungen 42, 43, 44 ausgebildet ist, die je nach Maschinenkonfiguration wahlweise an dem Lagermodul 18 unter Vermittlung einer Montageplatte 46 oder an dem Abstandhalter 14 anbringbar sind. Die Klemmvorrichtungen 42, 43, 44 dienen jeweils dazu, ein zu bearbeitendes Werkstück (nicht gezeigt), im Beispielsfall ein Kreissägeblatt (nicht gezeigt), nach Positionierung in einer Sollposition zur Bearbeitung mit der Bearbeitungseinheit 22 bzw. 32 festzuklemmen. Die Klemmvorrichtungen 42, 43, 44 sind mit einer Vorschubvorrichtung 48 koppelbar. Die Vorschubvorrichtung 48 dient dazu, das zu bearbeitende Werkstück schrittweise, beispielsweise Zahn für Zahn, in eine Bearbeitungsposition zu bewegen, wo es dann festgeklemmt wird. Der Vorschubvorrichtung 48 lassen sich wahlweise zwei alternative Klinken 54, 56 zuordnen, die je nach verwendetem Sägeblatt mit der Vorschubvorrichtung 48 gekoppelt werden können. Die Komponente 60 dient zur Verstellung der Schleifpinole des Schleifkopfs 24. Ist eine Solche Verstellung nicht erforderlich, wird die Komponente 60 durch eine einfache Abdeckung 58 ersetzt.

An die Montageplatte 46, die eine Schwenkplatte 47 aufweist, ist ferner ein Einfahrschlitten 52 montierbar, mit dem die Vorrichtung 10 auf verschiedene Werkstückgrößen eingestellt werden kann, beispielsweise auf verschiedene Sägeblätter unterschiedlichen Durchmessers. Alternativ zu dem Einfahrschlitten 52 ist ein Einfahrschlitten 50 vorgesehen, der am Abstandhalter 14 montierbar ist. Zu der Schwenkplatte 47 ist anzumerken, dass diese in der nachfolgend im Detail noch erläuterten zweiten Maschinenkonfiguration an dem Lagerauge 20 verschwenkbar anbringbar ist.

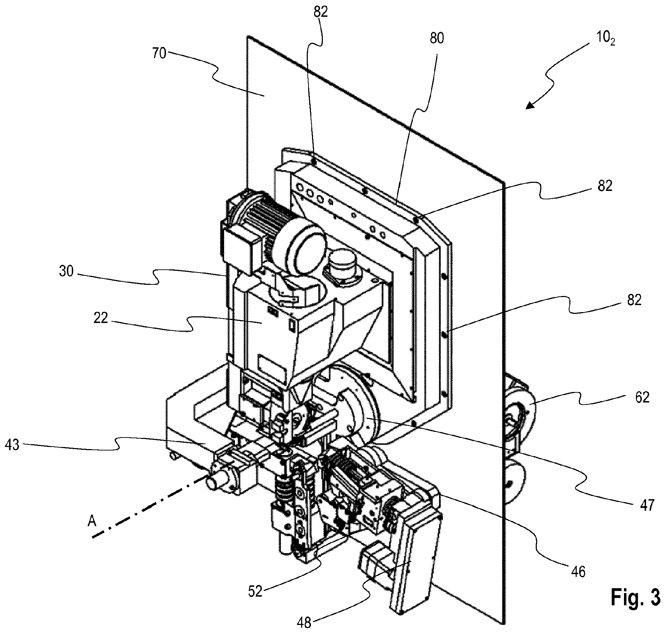

Auf der in Figur 1 rechten Seite der Basis 12 erkennt man zudem eine Schwenkeinheit 62, die in Abhängigkeit von der nachfolgend noch näher mit Bezug auf Figuren 2 und 3 erläuterten jeweiligen Maschinenkonfiguration zum Verschwenken verschiedener Maschinenkomponenten dient.

Die in Figur 1 gezeigte Explosionsdarstellung gibt einen Überblick darüber, wie sich mit der vorliegenden Erfindung je nach Bedarf eine Vorrichtung 10 an bestimmte Bearbeitungsanforderungen anpassen lässt. Hierauf wird nun im Detail eingegangen.

Figur 2 zeigt eine erste Konfiguration der erfindungsgemäßen Vorrichtung 10₁. Bei dieser ist die Basis 12 über eine Halteplatte 70 mit einem nicht gezeigten Untergrund fest verbunden. Die Basis 12 und die Halteplatte 70 bilden sozusagen die Maschinenbasis. An der Basis 12 ist der Abstandhalter 14 angebracht. Dieser trägt den Einfahrschlitten 50. Ferner ist an dem Abstandhalter 14 die Vorschubeinrichtung 48 angebracht. Mit der Maschinenbasis 12 fest gekoppelt ist darüber hinaus die Klemmvorrichtung 42.

In Figur 2 erkennt man aber auch, dass das Lagermodul 18 mit der daran angebrachten Bearbeitungseinheit 22 über das Lagerauge 20 (in Figur 2 verdeckt) um die Lagerachse A entsprechend dem Doppelpfeil P verschwenkbar ist, um die eine Schleifscheibe 72 der Bearbeitungseinheit 22 beispielsweise relativ zu einem jeweils zu bearbeitenden Schneidzahn eines nicht gezeigten Kreissägeblattes ausrichten zu können. Die Schleifscheibe 72 dient dabei beispielsweise zur Bearbeitung der Zahnbrust oder des Zahnrückens einzelner Zähne und taucht zur Bearbeitung in einen Zahnzwischenraum des Sägeblattes ein. Es sei angemerkt, dass hierfür die Bearbeitungseinheit 22 relativ zum Lagermodul 18 über eine verdeckte Schlittenanordnung verlagert werden kann. Diese wird im Folgenden noch mit Bezug auf die Figuren 4 bis 9 erläutert.

Alternativ zur Bearbeitungseinheit 22 lässt sich bei dieser Maschinenkonfiguration auch die Bearbeitungseinheit 32 (siehe Figur 1) zur Bearbeitung der Zahnflanken einsetzen.

Bei der Konfiguration gemäß Figur 2 ist das Lagermodul 18 um die Lagerachse A verschwenkbar. Diese Verschwenkbarkeit wird dadurch erreicht, dass das Lagerauge 20 schwenkbar an dem Basislagerauge 16 gelagert wird und über die Schwenkvorrichtung 62 in gesteuerter Weise verschwenkt werden kann.

Figur 3 zeigt eine zu Figur 2 alternative Ausgestaltung der erfindungsgemäßen Vorrichtung 10₂. Bei dieser Variante erkennt man, dass das Lagermodul 18 über einen umlaufenden Gehäuseflansch 80 mittels Befestigungsbolzen 82 fest an der Halteplatte 70 der Maschinenbasis angebracht ist. Auf der Rückseite der Halteplatte 70 ist die Schwenkeinheit 62 vorgesehen. Die Basis 12 ist bei dieser zweiten Konfiguration der erfindungsgemäßen Vorrichtung nicht erforderlich. Bei dieser Ausgestaltung ist das Lagermodul 18 fest an der Haltezunge 70 der Maschinenbasis fixiert. Das Lagermodul 18 ist also - im Gegensatz zu der Ausgestaltung gemäß Figur 2 - nicht verschwenkbar. Auch bei der Ausgestaltung gemäß Figur 3 ist die Bearbeitungseinheit 22 am Lagermodul 18 über eine verdeckte Schlittenanordnung verlagerbar angebracht. Alternativ kann wiederum die Bearbeitungseinheit 32 eingesetzt werden. Ferner ist anzumerken, dass auch die Klemmeinheit 43 an der Montageplatte 46 angebracht ist.

Allerdings ist bei dieser Ausgestaltung gemäß Figur 3 das zu bearbeitende Werkstück um die Lagerachse A verschwenkbar. Dies wird dadurch erreicht, dass die in Figur 1 gezeigte Montageplatte 46 und die daran angebrachten Komponenten Vorschubvorrichtung 48, Klemmeinheit 43 und Einfahrschlitten 52 vermittels der Schwenkeinheit 62 über die Schwenkplatte 47 um die Lagerachse A je nach Bedarf verschwenkbar sind. Dies wird durch Nutzung des Lagerauges 20 als Lagerstelle für die die weiteren Komponenten tragende Schwenkplatte 47 erreicht.

Die beiden Maschinenkonfigurationen 10₁ und 10₂ gemäß Figur 2 und Figur 3 haben also im wesentlichen dieselben Komponenten, unterscheiden sich jedoch darin, wie das Lagermodul 18 eingesetzt wird. Dieses kann verschwenkbar an der Maschinenbasis 12, 70 angeordnet sein, wie bei der Konfiguration gemäß Figur 2 oder fest an der Halteplatte 70 der Maschinenbasis angebracht sein, wie bei der Konfiguration gemäß Figur 3. Je nach gewünschter Konfiguration dient das Lagerauge 20 als Lagerung für das Verschwenken des Lagermoduls 18 selbst gegenüber der Maschinenbasis 12,70 oder als Lagerstelle für das Verschwenken der Schwenkplatte 47, die die weiteren Komponenten Einfahrschlitten 52, Vorschubeinrichtung 48 und Klemmeinheit 43 verschwenkbar trägt.

Mit diesem modularen Maschinenaufbau, der eine Wahl zwischen den beschriebenen Konfigurationen 10₁ und 10₂ zulässt, und je nach Bedarf unterschiedliche Bearbeitungseinheiten 22, 32, unterschiedliche Klemmeinheiten 42, 43, 44, unterschiedliche Vorschubeinrichtungen sowie allgemein unterschiedliche Werkstückaufnahmeeinrichtungen miteinander kombinierbar macht, lassen sich unterschiedliche Maschinen für unterschiedliche Zwecke aufbauen, beispielsweise zur Bearbeitung von Zahnflanken, Zahnbrust, Zahnrücken, zur Bearbeitung größerer oder kleinerer Kreissägeblätter et cetera. Auch lassen sich mit dieser Maschinenkonfiguration verschiedene Bearbeitungsaufgaben durch Einsatz unterschiedlicher Bearbeitungseinheiten 22 bzw. 32 durchführen, was einen Maschinenbaukasten mit hoher Flexibilität bei geringen Investitionskosten bereitstellt.

Wendet man sich nun dem zentralen Element, nämlich dem Lagermodul 18, zu, so erkennt man in den verschiedenen Ansichten gemäß den Figuren 4 bis 9 wie dieses im Detail aufgebaut ist.

Figur 4 zeigt dabei eine Anordnung, wie sie bei der Konfiguration gemäß Figur 3 zum Einsatz kommt, d.h. eine Anordnung, bei der um das Lagerauge 20 die Komponenten Vorschubeinrichtung, Klemmeinheit und Einfahrschlitten der Werkstückaufnahmeeinrichtung drehbar sind, wobei das Lagermodul 18 selbst über die Bolzen 82 an der Maschinenbasis (nicht gezeigt) fixiert ist.

Die Bearbeitungseinheit 22 ist entlang der Achsen X, Z über eine innerhalb des Lagermoduls 18 angeordnete Kreuzschlittenanordnung mit zueinander senkrecht stehenden Führungsschienen 90,92 verlagerbar. Diese Kreuzschlittenanordnung mit den Führungsschienen 90, 92 ist über ein Fenster 94 zugänglich, das in dem Gehäuse 96 des Lagermoduls 18 vorgesehen ist. Über dieses Fenster lassen sich die Bearbeitungseinheiten 22 bzw. 32 an der Kreuzschlittenanordnung anbringen.

Man erkennt, dass das Gehäuse 96 kastenartig ausgebildet ist und nach unten gerundet ausläuft, wobei es in einem unteren im wesentlichen dreieckförmigen Bereich 98 das Lagerauge 20 aufnimmt. Dieses umfasst einen in Figur 5 erkennbaren, in dem Gehäuse 96 drehbaren Lagerkörper 99. An diesem greift von der in Figur 5 rechten Seite die Schwenkvorrichtung 62 an. In Figur 5 erkennt man ferner, dass an diesem die Schwenkplatte 46 angebracht ist.

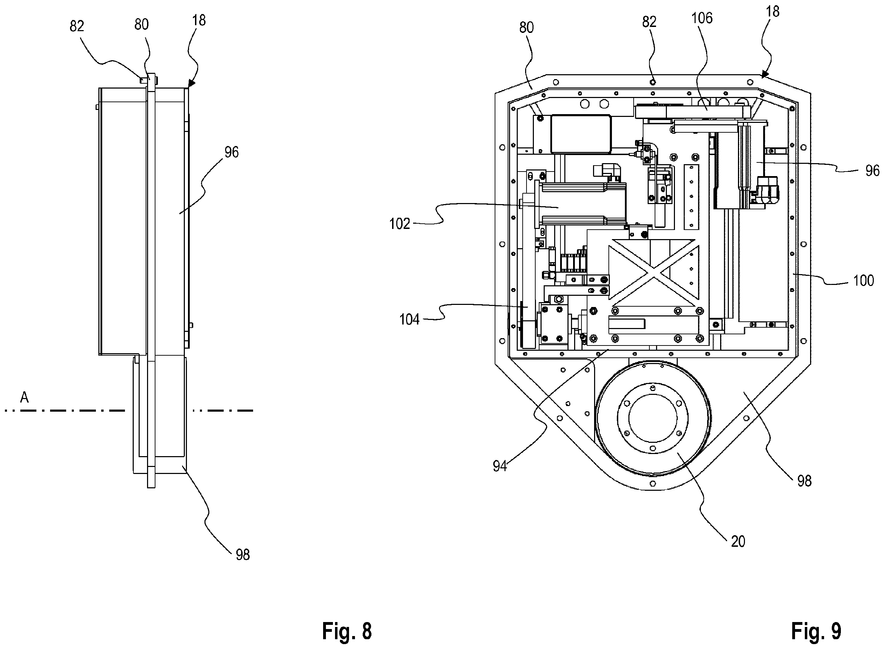

In der Rückansicht gemäß Figur 9 erkennt man verschiedene Steuerungskomponenten sowie Antriebsmotoren 100, 102 mit zugeordneten Antriebsriemen 104,106 für die Kreuzschlittenanordnung zur Verlagerung der Bearbeitungseinheit 22 bzw. 32 entlang der Achsen X, Z.

## Patentansprüche

1. Vorrichtung (10) mit variabler Konfiguration zum Schärfbearbeiten von Sägeblättern, umfassend:
- eine Maschinenbasis (12, 70) zum Anbringen der Vorrichtung (10) an einem Untergrund,
- ein Lagermodul (18) mit einer Lagerstelle (20), das an der Maschinenbasis (12, 70) anbringbar ist,
- eine Bearbeitungseinheit (22, 32), die unter Vermittlung des Lagermoduls (18) an der Maschinenbasis (12, 70) anbringbar ist, und
- eine Werkstückaufnahmeeinrichtung zur Aufnahme von zu bearbeitenden Werkstücken,
**dadurch gekennzeichnet, dass** die Lagerstelle (20) des Lagermoduls (18) dazu ausgebildet ist, um wahlweise
- in einer ersten Konfiguration der Vorrichtung (10₁) das Lagermodul (18) relativ zur Maschinenbasis (12, 70) um die Lagerstelle (20) verschwenkbar an der Maschinenbasis (12, 70) anzubringen, und
- in einer zweiten Konfiguration der Vorrichtung (10₂), in der das Lagermodul (18) fest an der Maschinenbasis (70) angebracht ist, die Werkstückaufnahmeeinrichtung verschwenkbar relativ zum Lagermodul (18) aufzunehmen.

2. Vorrichtung (10) nach Anspruch 1,
**dadurch gekennzeichnet, dass** die Lagerstelle ein Lagerauge (20) mit einer Lagerachse (A) aufweist, die als Schwenkachse für das Lagermodul (18) in der ersten Konfiguration der Vorrichtung (10₁) und als Schwenkachse (A) für die Werkstückaufnahmeeinrichtung in der zweiten Konfiguration der Vorrichtung (10₂) vorgesehen ist.

3. Vorrichtung (10) nach Anspruch 1 oder 2,
**dadurch gekennzeichnet, dass** das Lagermodul (18) ein Gehäuse (96) mit einem Gehäuseflansch (80) aufweist, der zum Anbringen an der Maschinenbasis (70) in der zweiten Konfiguration der Vorrichtung (10) vorgesehen ist.

4. Vorrichtung (10) nach einem der vorangehenden Ansprüche,
**dadurch gekennzeichnet, dass** an dem Lagermodul (18) die Bearbeitungseinheit (22, 32), vorzugsweise über eine Mehrachs-Schlittenanordnung, beweglich angebracht ist.

5. Vorrichtung (10) nach einem der vorangehenden Ansprüche,
**dadurch gekennzeichnet, dass** die Bearbeitungseinheit (22, 32) wenigstens eine drehangetriebene Bearbeitungsspindel umfasst.

6. Vorrichtung (10) nach einem der vorangehenden Ansprüche,
**dadurch gekennzeichnet, dass** der Werkstückaufnahmeeinrichtung wenigstens eine Spannvorrichtung (42, 43, 44) zuordenbar ist, mit der das zu bearbeitende Werkstück aufnehmbar ist.

7. Vorrichtung (10) nach einem der vorangehenden Ansprüche,
**dadurch gekennzeichnet, dass** der Werkstückaufnahmeeinrichtung wenigstens eine Vorschubvorrichtung (48) zuordenbar ist, mit der das zu bearbeitende Werkstück, vorzugsweise im Falle eines kreisrunden Sägeblattes mit einer Mehrzahl von Schneidzähnen, schrittweise zur Bearbeitung einzelner Zähne verlagerbar ist.

8. Vorrichtung (10) nach einem der vorangehenden Ansprüche,
**dadurch gekennzeichnet, dass** die Werkstückaufnahmeeinrichtung eine Schlittenvorrichtung zum Anpassen an verschiedene Werkstückgrößen aufweist.

9. Vorrichtung (10) nach einem der vorangehenden Ansprüche,
**dadurch gekennzeichnet, dass** in der ersten Konfiguration der Vorrichtung (10₁) die Werkstückaufnahmeeinrichtung fest mit der Maschinenbasis (12, 70) gekoppelt ist.

10. Vorrichtung (10) nach einem der vorangehenden Ansprüche,
**dadurch gekennzeichnet, dass** wenigstens eine Schwenkeinheit (62) an der Maschinenbasis (12, 70) vorgesehen ist, um in der ersten Konfiguration der Vorrichtung (10₁) das Lagermodul (18) um die Lagerachse (A) zu verschwenken und um in der zweiten Konfiguration der Vorrichtung (10₂) die Werkstückaufnahmeeinrichtung um die Lagerachse (A) zu verschwenken

11. Vorrichtung (10) nach einem der vorangehenden Ansprüche,
**dadurch gekennzeichnet, dass** die Bearbeitungseinheit (22, 32) wenigstens eine Schleif- oder Erodierscheibe aufweist.

## Claims

1. A device (10) with a variable configuration for sharpening saw blades, comprising:
- a machine base (12, 70) for mounting the device (10) on a subsurface,
- a bearing module (18), having a bearing point (20), which is mountable on the machine base (12, 70),
- a machining unit (22, 32) that is mountable on the machine base (12, 70) by means of the bearing module (18), and
- a workpiece holding device for holding workpieces to be machined,
**characterized in that** the bearing point (20) of the bearing module (18) is designed for selectively
- mounting the bearing module (18) on the machine base (12, 70) so that it is pivotable about the bearing point (20) relative to the machine base (12, 70), in a first configuration of the device (10₁), and
- accommodating the workpiece holding device so that it is pivotable relative to the bearing module (18), in a second configuration of the device (10₂) in which the bearing module (18) is fixedly mounted on the machine base (70).

2. The device (10) according to Claim 1,
**characterized in that** the bearing point has a bearing eye (20) with a bearing axis (A) that is provided as a pivot axis for the bearing module (18) in the first configuration of the device (10₁), and is provided as a pivot axis (A) for the workpiece holding device in the second configuration of the device (10₂).

3. The device (10) according to Claim 1 or 2,
**characterized in that** the bearing module (18) has a housing (96) with a housing flange (80) that is provided for mounting on the machine base (70) in the second configuration of the device (10).

4. The device (10) according to one of the preceding claims,
**characterized in that** the machining unit (22, 32) is movably mounted on the bearing module (18), preferably via a multiaxial carriage system.

5. The device (10) according to one of the preceding claims,
**characterized in that** the machining unit (22, 32) includes at least one rotationally driven machining spindle.

6. The device (10) according to one of the preceding claims,
**characterized in that** at least one tensioning device (42, 43, 44) via which the workpiece to be machined may be accommodated is associatable with the workpiece holding device.

7. The device (10) according to one of the preceding claims,
**characterized in that** at least one feed device (48), via which the workpiece to be machined is displaceable in a stepwise manner for sharpening individual teeth, preferably in the case of a circular saw blade having a plurality of cutting teeth, is associatable with the workpiece holding device.

8. The device (10) according to one of the preceding claims,
**characterized in that** the workpiece holding device has a carriage device for adapting to various sizes of workpieces.

9. The device (10) according to one of the preceding claims,
**characterized in that** in the first configuration of the device (10₁) the workpiece holding device is fixedly coupled to the machine base (12, 70).

10. The device (10) according to one of the preceding claims,
**characterized in that** at least one pivot unit (62) is provided on the machine base (12, 70) for pivoting the bearing module (18) about the bearing axis (A) in the first configuration of the device (10₁), and for pivoting the workpiece holding device about the bearing axis (A) in the second configuration of the device (10₂).

11. The device (10) according to one of the preceding claims,
**characterized in that** the machining unit (22, 32) has at least one grinding or eroding disk.

## Revendications

1. Dispositif (10) à configuration variable destiné à l'aiguisement de lames de scie, comprenant :
- une base de machine (12, 70) pour installer le dispositif (10) sur une surface,
- un module de support (18) doté d'un point d'appui (20), qui peut être monté sur la base de machine (12, 70),
- une unité d'usinage (22, 32) susceptible d'être montée sur la base de machine (12, 70) par l'intermédiaire du module de support (18) et
- un dispositif de réception de pièce destiné à recevoir les pièces à usiner,
**caractérisé en ce que** le point d'appui (20) du module de support (18) est conçu pour, au choix,
- monter le module de support (18) sur la base de machine (12, 70) de manière pivotante par rapport à la base de machine (12, 70) autour du point d'appui (20) dans une première configuration du dispositif (10₁), et
- recevoir le dispositif de réception de pièce de manière pivotante par rapport au module de support (18) dans une deuxième configuration du dispositif (10₂), dans laquelle le module de support (18) est rendu solidaire de la base de machine (70).

2. Dispositif (10) selon la revendication 1,
**caractérisé en ce que** le point d'appui comporte un oeil de support (20) ayant un axe de support (A) qui est prévu comme axe de pivotement pour le module de support (18) dans la première configuration du dispositif (10₁) et comme axe de pivotement (A) pour le dispositif de réception de pièce dans la deuxième configuration du dispositif (10₂).

3. Dispositif (10) selon la revendication 1 ou 2,
**caractérisé en ce que** le module de support (18) comporte un carter (96) avec une bride de carter (80) qui est prévue pour être montée sur la base de machine (70) dans la deuxième configuration du dispositif (10).

4. Dispositif (10) selon l'une des revendications précédentes,
**caractérisé en ce que** l'unité d'usinage (22, 32) est montée mobile sur le module de support (18), de préférence par l'intermédiaire d'un ensemble formant chariot multiaxe.

5. Dispositif (10) selon l'une des revendications précédentes,
**caractérisé en ce que** l'unité d'usinage (22, 32) comprend au moins une broche d'usinage entraînée en rotation.

6. Dispositif (10) selon l'une des revendications précédentes,
**caractérisé en ce qu'**au moins un dispositif de serrage (42, 43, 44) peut être associé au dispositif de réception de pièce, la pièce à usiner pouvant être reçue à l'aide dudit dispositif de serrage.

7. Dispositif (10) selon l'une des revendications précédentes,
**caractérisé en ce qu'**au moins un dispositif d'avance (48) peut être associé au dispositif de réception de pièce, la pièce à usiner pouvant être déplacée progressivement à l'aide dudit dispositif d'avance pour l'usinage de dents individuelles, de préférence dans le cas d'une lame de scie circulaire comportant une pluralité de dents de coupe.

8. Dispositif (10) selon l'une des revendications précédentes,
**caractérisé en ce que** le dispositif de réception de pièce comporte un dispositif de chariot pour l'adaptation à différentes tailles de pièces.

9. Dispositif (10) selon l'une des revendications précédentes,
**caractérisé en ce que** le dispositif de réception de pièce est couplé solidement à la base de machine (12, 70) dans la première configuration du dispositif (10₁).

10. Dispositif (10) selon l'une des revendications précédentes,
**caractérisé en ce qu'**au moins une unité de pivotement (62) est prévue sur la base de machine (12, 70) pour faire pivoter le module de support (18) autour de l'axe de support (A) dans la première configuration du dispositif (10₁), et pour faire pivoter le dispositif de réception de pièce autour de l'axe de support (A) dans la deuxième configuration du dispositif (10₂).

11. Dispositif (10) selon l'une des revendications précédentes,
**caractérisé en ce que** l'unité d'usinage (22, 32) présente au moins un disque abrasif ou un disque d'érosion.
